# EUROPEAN PATENT APPLICATION

(11) **EP 4 358 277 A1**
(43) Date of publication of application: **24.04.2024**
(21) Application number: 21958785.4
(22) Date of filing: 29.09.2021
(51) Int. Cl.: H01M 50/531

(54) **BATTERY CELL AND METHOD AND SYSTEM FOR MANUFACTURING SAME, AND BATTERY AND ELECTRIC DEVICE**

(71) Applicant: Contemporary Amperex Technology Co., Limited, Ningde City, Fujian 352100 (CN)
(72) Inventor: YANG, Zhenfei, Ningde, Fujian 352100 (CN); WEN, Yuqian, Ningde, Fujian 352100 (CN); ZHU, Wenqi, Ningde, Fujian 352100 (CN)
(74) Representative: Gong, Jinping
(86) International application number: PCT/CN2021/121845
(87) International publication number: WO 2023/050197

(57) **Abstract**

Embodiments of the present application provide a battery cell, a method and system for manufacturing the battery cell, a battery, and a power consuming device. The battery cell includes: a shell including an electrode draw-out portion; and an electrode assembly accommodated in the shell. The end of the electrode assembly facing toward the electrode draw-out portion is provided with a first tab, the first tab is wound around a winding axis of the electrode assembly and includes a plurality of turns of tab layers, and at least some of the plurality of turns of tab layers are welded to form a first welded portion. Some of the plurality of turns of tab layers are welded to the electrode draw-out portion to form a second welded portion; and among the tab layers connected to the first welded portion, at least one turn of tab layer is not welded to the electrode draw-out portion. In the present application, the overcurrent capability of the battery cell can be improved.

## Description

### Technical Field

The present application relates to the technical field of batteries, and in particular, to a battery cell, a method and system for manufacturing the battery cell, a battery, and a power consuming device.

### Background Art

Battery cells are widely used in electronic devices, such as a mobile phone, a notebook computer, an electromobile, an electric vehicle, an electric airplane, an electric ship, an electric toy car, an electric toy ship, an electric toy airplane, and an electric tool. The battery cells may include a nickel-cadmium battery cell, a nickel-hydrogen battery cell, a lithium-ion battery cell, a secondary alkaline zinc-manganese battery cell, etc.

In development of battery technology, how to improve an overcurrent capability of battery cells is an urgent technical problem to be solved in the battery technology.

### Summary of the Invention

The present application provides a battery cell, a method and system for manufacturing the battery cell, a battery, and a power consuming device, in which the overcurrent capability of the battery cell can be improved.

In a first aspect, an embodiment of the present application provides a battery cell, comprising:
a shell comprising an electrode draw-out portion; and
an electrode assembly accommodated in the shell, the end of the electrode assembly facing toward the electrode draw-out portion being provided with a first tab, the first tab being wound around a winding axis of the electrode assembly and comprising a plurality of turns of tab layers, and at least some of the plurality of turns of tab layers being welded to form a first welded portion;
wherein some of the plurality of turns of tab layers are welded to the electrode draw-out portion to form a second welded portion; and among the tab layers connected to the first welded portion, at least one turn of tab layer is not welded to the electrode draw-out portion.

In the above solution, the tab layers that are not welded to the electrode draw-out portion are welded to shorten a conductive path between the tab layers as well as a conductive path between the tab layers and the electrode draw-out portion, thereby reducing the resistance, improving the uniformity of current density, reducing the risk of polarization of electrode plates, and improving the overcurrent capability and the charging efficiency of the battery cell.

In some embodiments, at least one turn of tab layer is connected to the first welded portion and the second welded portion.

In the above solution, the at least one turn of tab layer can transfer current collected in the first welded portion to the second welded portion to shorten a conductive path between the first welded portion and the second welded portion, thereby reducing the resistance, improving the uniformity of current density, reducing the risk of polarization of electrode plates, and improving the overcurrent capability and the charging efficiency of the battery cell.

In some embodiments, the first welded portion is directly connected to the second welded portion.

In the above solution, the current collected in the first welded portion can directly flow into the second welded portion, thereby further shortening the conductive path between the first welded portion and the second welded portion, reducing the resistance, and improving the overcurrent capability and the charging efficiency of the battery cell.

In some embodiments, the second welded portion comprises a first part formed at the electrode draw-out portion and a second part formed at the first tab. In a direction parallel to the winding axis, the second part has a dimension greater than a dimension of the first welded portion.

In the above solution, the first welded portion has a smaller dimension such that energy required for welding of the first tab is reduced and the risk of burning the electrode assembly is reduced. In the above solution, the dimension of the second part is greater than the dimension of the first welded portion such that the strength of a connection between the electrode draw-out portion and the first tab is ensured and the risk of failure of the battery cell is reduced.

In some embodiments, in the direction parallel to the winding axis, the dimension of the first welded portion is 0.2 mm to 0.5 mm, and the dimension of the second part is 0.5 mm to 1.5 mm.

In some embodiments, the total number of turns of tab layers is N1, N2 turns of the tab layers are connected to each other via the first welded portion, and a value of N2/N1 is 0.5 to 0.95.

In the above solution, the value of N2/N1 is set to 0.5 to 0.95, to reduce the resistance, improve the overcurrent, and reduce the risk of burning the electrode assembly.

In some embodiments, the first welded portion comprises a plurality of first welded sub-portions, the plurality of first welded sub-portions being spaced apart in a circumferential direction of the first tab.

In the above solution, the first welded portion may be formed by multiple weldings to reduce heat generated in a single welding and reduce the risk of burning the electrode assembly due to high temperature.

In some embodiments, the first welded sub-portion is linear, V-shaped, W-shaped, or curved.

In some embodiments, the first welded portion is of a helical structure arranged around the winding axis.

In some embodiments, a plurality of second welded portions are provided, which are spaced apart, and at least two of which are connected to different tab layers.

In the above solution, the plurality of second welded portions all enable current transfer between the first tab and the electrode draw-out portion to reduce the difference in conductive paths of different tab layers, thereby improving the uniformity of current density, reducing the risk of polarization of electrode plates, and improving the overcurrent capability and the charging efficiency of the battery cell.

In some embodiments, end portions of the plurality of turns of tab layers facing toward the electrode draw-out portion are bent and brought closer to each other such that a gap between the end portions is reduced. The end portions are configured to be welded to form the first welded portion and the second welded portion.

In the above solution, the end portions of the plurality of turns of tab layers are bent and brought closer to each other such that a slit between the tab layers is reduced, thereby reducing the risk of laser leakage during welding.

In some embodiments, the electrode draw-out portion comprises a body portion and a connecting portion, the connecting portion surrounds an outer side of the body portion, and the connecting portion has a thickness less than that of the body portion. The connecting portion is configured to be welded to the first tab to form the second welded portion. In the direction parallel to the winding axis, the first welded portion overlaps at least partially with the body portion.

In the above solution, the thickness of the connecting portion is reduced to reduce energy required for welding of the connecting portion and the first tab, thereby reducing the risk of burning a separator of the electrode assembly. In the above solution, the first welded portion is connected to the tab layers that overlap with the body portion so as to shorten the conductive path of the tab layers, thereby reducing the resistance and improving the overcurrent capability.

In some embodiments, the electrode draw-out portion further comprises a reinforcing portion, the reinforcing portion protruding from the surface of the connecting portion facing away from the electrode assembly and being connected to the body portion. A part of the connecting portion that is not covered by the reinforcing portion is configured to be welded to the first tab to form the second welded portion.

In the above solution, the reinforcing portion is provided to increase the strength of the electrode draw-out portion, reduce deformation of the electrode draw-out portion and reduce the risk of cracking of the second welded portion.

In some embodiments, a plurality of reinforcing portions are provided, which are spaced apart in a circumferential direction of the body portion.

In the above solution, the plurality of reinforcing portions may further increase the strength of the electrode draw-out portion and make the strength of the electrode draw-out portion more uniform.

In some embodiments, the shell comprises a housing and an end cap, the housing is provided with an opening, and the end cap covers the opening of the housing; and The end cap is the electrode draw-out portion.

In the above solution, the end cap is used as the electrode draw-out portion such that a conventional electrode terminal may be omitted, thereby simplifying the structure of the battery cell. In the above solution, the end cap is directly welded to the first tab such that a conventional current collector disk may be omitted, thereby reducing the cost and simplifying the assembly process.

In some embodiments, the battery cell is a cylindrical battery cell.

In a second aspect, an embodiment of the present application provides a battery, comprising a plurality of battery cells according to any embodiment in the first aspect.

In a third aspect, an embodiment of the present application provides a power consuming device, comprising the battery according to the second aspect, wherein the battery is configured to supply electric energy.

In a fourth aspect, an embodiment of the present application provides a method for manufacturing a battery cell, the method comprising:
providing an electrode assembly, wherein one end of the electrode assembly is provided with a first tab, and the first tab is wound around a winding axis of the electrode assembly and comprises a plurality of turns of tab layers;
welding at least some of the plurality of turns of tab layers to form a first welded portion;
providing a shell and placing the electrode assembly into the shell, wherein the shell comprises an electrode draw-out portion, and the first tab is located at the end of the electrode assembly facing toward the electrode draw-out portion; and
welding some of the plurality of turns of tab layers to the electrode draw-out portion to form a second welded portion;
wherein among the tab layers connected to the first welded portion, at least one turn of tab layer is not welded to the electrode draw-out portion.

In a fifth aspect, an embodiment of the present application provides a system for manufacturing a battery cell, the system comprising:
a first providing device for providing an electrode assembly, wherein one end of the electrode assembly is provided with a first tab, and the first tab is wound around a winding axis of the electrode assembly and comprises a plurality of turns of tab layers;
a first welding device for welding at least some of the plurality of turns of tab layers to form a first welded portion;
a second providing device for providing a shell and placing the electrode assembly into the shell, wherein the shell comprises an electrode draw-out portion, and the first tab is located at the end of the electrode assembly facing toward the electrode draw-out portion; and
a second welding device for welding some of the plurality of turns of tab layers to the electrode draw-out portion to form a second welded portion;
wherein among the tab layers connected to the first welded portion, at least one turn of tab layer is not welded to the electrode draw-out portion.

### Brief Description of the Drawings

In order to illustrate the technical solutions of the embodiments of the present application more clearly, the drawings required in the description of the embodiments of the present application will be described briefly below. Obviously, the drawings described below are merely some embodiments of the present application, and for those of ordinary skill in the art, other drawings can also be obtained from these drawings without any creative efforts.
FIG. 1 is a schematic structural diagram of a vehicle provided in some embodiments of the present application;
FIG. 2 is a schematic exploded view of a battery provided in some embodiments of the present application;
FIG. 3 is a schematic structural diagram of a battery module shown in FIG. 2;
FIG. 4 is a schematic cross-sectional view of a battery cell provided in some embodiments of the present application;
FIG. 5 is a schematic enlarged view of the battery cell shown in FIG. 4 at circle A;
FIG. 6 is a schematic structural diagram of an electrode assembly of a battery cell provided in some embodiments of the present application;
FIG. 7 is a schematic top view of a battery cell provided in some embodiments of the present application;
FIG. 8 is a schematic structural diagram of an electrode assembly of a battery cell provided in some other embodiments of the present application;
FIG. 9 is a schematic flowchart of a method for manufacturing a battery cell provided in some embodiments of the present application; and
FIG. 10 is a schematic block diagram of a system for manufacturing a battery cell provided in some embodiments of the present application.

In the accompanying drawings, the figures are not drawn to scale.

### Detailed Description of Embodiments

In order to make the objectives, technical solutions and advantages of the embodiments of the present application clearer, the technical solutions in the embodiments of the present application will be described clearly below with reference to the drawings in the embodiments of the present application. Obviously, the embodiments described are some of, rather than all of, the embodiments of the present application. All the other embodiments obtained by those of ordinary skill in the art based on the embodiments of the present application without any creative effort shall fall within the scope of protection of the present application.

Unless otherwise defined, all technical and scientific terms used in the present application have the same meanings as those commonly understood by those skilled in the art to which the present application belongs. The terms used in the description of the present application are merely for the purpose of describing specific embodiments, but are not intended to limit the present application. The terms "comprising" and "having" and any variations thereof in the description and the claims of the present application as well as the brief description of accompanying drawings described above are intended to cover non-exclusive inclusion. The terms "first", "second", etc. in the description and the claims of the present application as well as the foregoing accompanying drawings are used to distinguish between different objects, rather than describing a specific order or a primary-secondary relationship.

In the present application, "embodiment" mentioned means that the specific features, structures and characteristics described in conjunction with the embodiments may be included in at least one embodiment of the present application. The phrase at various locations in the description does not necessarily refer to the same embodiment, or an independent or alternative embodiment exclusive of another embodiment.

In the description of the present application, it should be noted that, the terms "mount", "connected", "connect", or "attach" should be interpreted in a broad sense unless explicitly defined and limited otherwise. For example, they may be a fixed connection, a detachable connection, or an integral connection; or may be a direct connection, an indirect connection by means of an intermediate medium, or internal communication between two elements. For those of ordinary skill in the art, the specific meaning of the foregoing term in the present application may be understood according to specific circumstances.

The term "and/or" in the present application is merely a description of the associated relationship of associated objects, representing that three relationships may exist. For example, A and/or B, may be expressed as: the three instances of A alone, both A and B, and B alone. In addition, the character "/" in the present application generally indicates that the associated objects before and after the character are in a relationship of "or".

In the embodiments of the present application, the same reference numerals denote the same components, and for the sake of brevity, the detailed description of the same components is omitted in different embodiments. It should be understood that the dimensions, such as thickness, length and width, of the various components in the embodiments of the present application illustrated in the accompanying drawings, as well as the dimensions, such as an overall thickness, length and width, of an integrated apparatus are merely illustrative and should not be construed to limit the present application in any way.

"A plurality of" appearing in the present application means two or more (including two), and "a plurality of turns" means two or more turns (including two turns).

In the present application, a battery cell may include a lithium-ion secondary battery cell, a lithium-ion primary battery cell, a lithium-sulfur battery cell, a sodium-lithium-ion battery cell, a sodium-ion battery cell, a magnesium-ion battery cell, or the like, which is not limited in the embodiments of the present application.

A battery mentioned in the embodiments of the present application refers to a single physical module comprising one or more battery cells to provide a high voltage and capacity. For example, the battery mentioned in the present application may comprise a battery module, a battery pack, etc. The battery generally comprises a case for enclosing one or more battery cells. The case can prevent liquid or other foreign matters from affecting the charging or discharging of a battery cell.

The battery cell comprises an electrode assembly and an electrolyte, the electrode assembly comprising a positive electrode plate, a negative electrode plate, and a separator. The battery cell operates mainly by relying on movements of metal ions between the positive electrode plate and the negative electrode plate. The positive electrode plate comprises a positive current collector and a positive active material layer. A surface of the positive current collector is coated with the positive active material layer; and The positive current collector comprises a positive current collecting portion and a positive tab connected to the positive current collecting portion. The positive current collecting portion is coated with the positive active material layer, and the positive tab is not coated with the positive active material layer. Taking a lithium-ion battery as an example, the positive current collector may be made of aluminum, and the positive active material layer comprises a positive active material which may be lithium cobalt oxides, lithium iron phosphate, ternary lithium, lithium manganate, etc. The negative electrode plate comprises a negative current collector and a negative active material layer. A surface of the negative current collector is coated with the negative active material layer. The negative current collector comprises a negative current collecting portion and a negative tab connected to the negative current collecting portion. The negative current collecting portion is coated with the negative active material layer, and the negative tab is not coated with the negative active material layer. The negative current collector may be made of copper, and the negative active material layer comprises a negative active material which may be carbon, silicon, etc. The separator may be made of polypropylene (PP), polyethylene (PE), etc.

The battery cell further comprises a shell configured to accommodate an electrode assembly and an electrolyte. The shell comprises a housing and an end cap connected to the housing. The housing and the end cap form an accommodating cavity for accommodating the electrode assembly and the electrolyte. The electrode assembly may be electrically connected to the end cap, or electrically connected to an electrode terminal provided on the end cap.

Current is input into and output from the electrode assembly generally through a tab. In order to improve the overcurrent capability of the tab, the inventors have attempted to configure the tab in a wound structure. A wound tab comprises a plurality of turns of tab layers. The plurality of turns of tab layers are connected end to end in a winding direction. Compared with a tab in the prior art, the winding type tab has a larger overcurrent area and a stronger resistance to high current.

However, the inventors have found that when the tab is connected to an electrode draw-out portion of the shell, the tab layers that can be directly welded to the electrode draw-out portion are relatively limited in number due to the factors such as the shape and the position of the electrode draw-out portion, which leads to a long conductive path between the electrode draw-out portion and the tab layers that are not welded to the electrode draw-out portion, resulting in a high resistance and nonuniform current density of the electrode assembly, causing the risk of polarization of electrode plates and affecting the overcurrent capability and the charging efficiency of the battery cell.

In view of this, embodiments of the present application provide a technical solution, in which the tab layers that are not welded to the electrode draw-out portion are welded to shorten a conductive path between the tab layers as well as a conductive path between the tab layers and the electrode draw-out portion, thereby reducing the resistance of the electrode assembly, improving the uniformity of current density, reducing the risk of polarization of electrode plates, and improving the overcurrent capability and the charging efficiency of the battery cell.

The technical solutions described in the embodiments of the present application are applicable to a battery and a power consuming device using a battery.

The power consuming device may be a vehicle, a mobile phone, a portable device, a notebook computer, a ship, a spacecraft, an electric toy, an electric tool, etc. The vehicle may be a fuel vehicle, a gas vehicle or a new-energy vehicle. The new-energy vehicle may be a battery electric vehicle, a hybrid vehicle, an extended-range vehicle, etc. The spacecraft includes an airplane, a rocket, an aerospace plane, a spaceship, etc. The electric toy includes a stationary or mobile electric toy, such as a game machine, an electric toy car, an electric toy ship, and an electric toy airplane. The electric tool includes a metal cutting electric tool, a grinding electric tool, an assembling electric tool, and a railway electric tool, such as an electric drill, an electric grinder, an electric wrench, an electric screwdriver, an electric hammer, an electric impact drill, a concrete vibrator, and an electric planer. The foregoing power consuming devices are not specifically limited in the embodiments of the present application.

For ease of description, an example in which a power consuming device refers to a vehicle is used for description in the following embodiments.

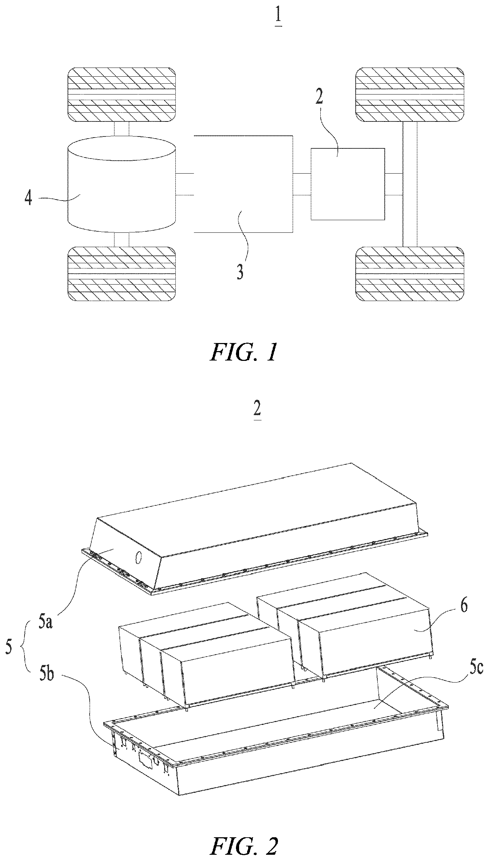

FIG. 1 is a schematic structural diagram of a vehicle provided in some embodiments of the present application.

As shown in FIG. 1, a battery 2 is provided inside the vehicle 1, and the battery 2 may be arranged at the bottom, the head or the tail of the vehicle 1. The battery 2 may be configured to supply power to the vehicle 1. For example, the battery 2 may be used as an operating power supply of the vehicle 1.

The vehicle 1 may further comprise a controller 3 and a motor 4. The controller 3 is configured to control the battery 2 to supply power to the motor 4, for example, to meet working power requirements during starting, navigation and traveling of the vehicle 1.

In some embodiments of the present application, the battery 2 can not only serve as a power supply for operating the vehicle 1, but also serve as a power supply for driving the vehicle 1, in place of or partially in place of fuel or natural gas, to provide driving power for the vehicle 1.

FIG. 2 is a schematic exploded view of a battery provided in some embodiments of the present application.

As shown in FIG. 2, the battery 2 comprises a case 5 and battery cells (not shown in FIG. 2) which are accommodated in the case 5.

The case 5 is configured to accommodate the battery cells, and the case 5 may have various structures. In some embodiments, the case 5 may comprise a first case part 5a and a second case part 5b, the first case part 5a and the second case part 5b cover each other, and the first case part 5a and the second case part 5b jointly define an accommodating space 5c for accommodating the battery cells. The second case part 5b may be of a hollow structure with one end opened, the first case part 5a is of a plate-like structure, and the first case part 5a covers the open side of the second case part 5b to form the case 5 having the accommodating space 5c. The first case part 5a and the second case part 5b each may also be of a hollow structure with one side opened, and the open side of the first case part 5a covers the open side of the second case part 5b to form the case 5 having the accommodating space 5c. Of course, the first case part 5a and the second case part 5b may have various shapes such as a cylinder and a cuboid.

To improve the sealing performance after the first case part 5a and the second case part 5b are connected to each other, a seal, such as a sealant and a seal ring, may be also provided between the first case part 5a and the second case part 5b.

Assuming that the first case part 5a covers the top of the second case part 5b, the first case part 5a may also be referred to as an upper case cover, and the second case part 5b may also be referred to as a lower case body.

In the battery 2, one or more battery cells may be provided. If a plurality of battery cells are provided, the plurality of battery cells may be in series connection or parallel connection or series-parallel connection. The series-parallel connection means that some of the plurality of battery cells are in series connection and some are in parallel connection. The plurality of battery cells may be directly in series connection or parallel connection or series-parallel connection, and then a unit composed of the plurality of battery cells is accommodated in the case 5. Of course, a plurality of battery cells may also be first in series connection or parallel connection or series-parallel connection to form a battery module 6, and a plurality of battery modules 6 are in series connection or parallel connection or series-parallel connection to form a unit and are accommodated in the case 5.

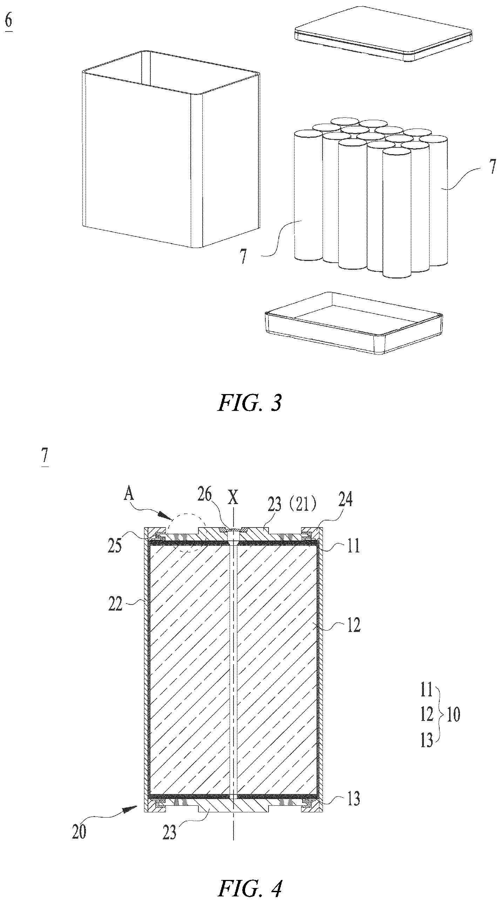

FIG. 3 is a schematic structural diagram of the battery module shown in FIG. 2.

In some embodiments, as shown in FIG. 3, a plurality of battery cells 7 are provided, and the plurality of battery cells 7 are connected in series or in parallel or in series-parallel to form a battery module 6. A plurality of battery modules 6 are connected in series or in parallel or in series-parallel to form a unit and are accommodated in the case.

The plurality of battery cells 7 in the battery module 6 may be electrically connected to each other by means of a busbar component to implement series connection or parallel connection or series-parallel connection between the plurality of battery cells 7 in the battery module 6. There may be one or more busbar components, and each busbar component is configured to electrically connect at least two battery cells.

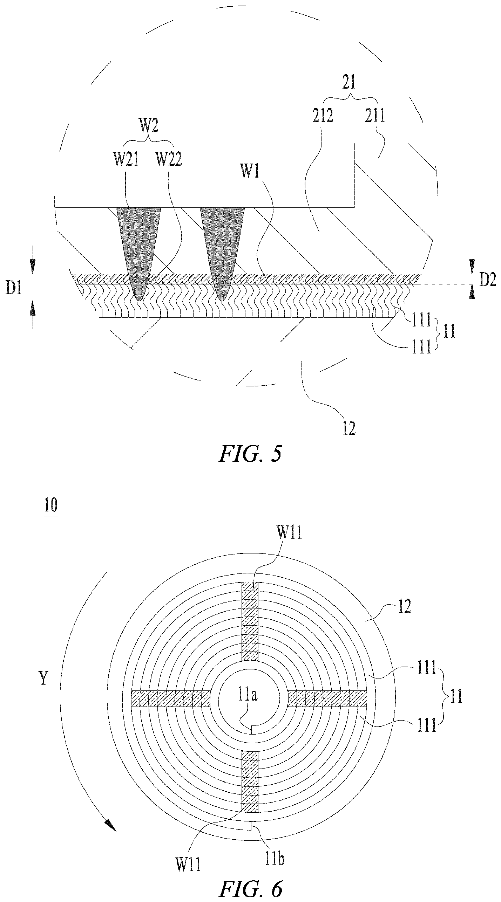

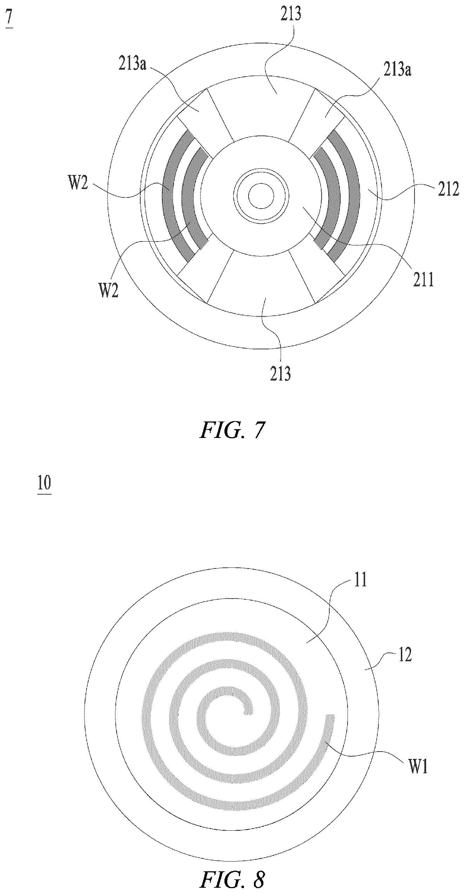

FIG. 4 is a schematic cross-sectional view of a battery cell provided in some embodiments of the present application; FIG. 5 is a schematic enlarged view of the battery cell shown in FIG. 4 at circle A; FIG. 6 is a schematic structural diagram of an electrode assembly of a battery cell provided in some embodiments of the present application; and FIG. 7 is a schematic top view of a battery cell provided in some embodiments of the present application.

As shown in FIGS. 4 to 7, embodiments of the present application provide a battery cell 7, comprising: a shell 20 comprising an electrode draw-out portion 21; and an electrode assembly 10 accommodated in the shell 20. The end of the electrode assembly 10 facing toward the electrode draw-out portion 21 is provided with a first tab 11. The first tab 11 is wound around a winding axis X of the electrode assembly 10 and comprises a plurality of turns of tab layers 111, and at least some of the plurality of turns of tab layers 111 are welded to form a first welded portion W1. Some of the plurality of turns of tab layers 111 are welded to the electrode draw-out portion 21 to form a second welded portion W2; and among the tab layers 111 connected to the first welded portion W1, at least one turn of tab layer 111 is not welded to the electrode draw-out portion 21.

The electrode assembly 10 includes a first electrode plate, a second electrode plate, and a separator configured to separate the first electrode plate from the second electrode plate. The first electrode plate and the second electrode plate have opposite polarities. In other words, one of the first electrode plate and the second electrode plate is a positive electrode plate, and the other of the first electrode plate and the second electrode plate is a negative electrode plate.

The first electrode plate, the second electrode plate and the separator each is of a strip-shaped structure, and the first electrode plate, the second electrode plate and the separator are wound around the winding axis X as one piece to form a wound structure. The wound structure may be a cylindrical structure, a flat structure or a structure of another shape.

Seen from the appearance of the electrode assembly 10, the electrode assembly 10 comprises a main body portion 12, a first tab 11, and a second tab 13. The first tab 11 and the second tab 13 protrude from the main body portion 12. The first tab 11 is a part of the first electrode plate that is not coated with an active material layer, and the second tab 13 is a part of the second electrode plate that is not coated with an active material layer. Correspondingly, one of the first tab 11 and the second tab 13 is a positive tab and the other one is a negative tab.

The first tab 11 and the second tab 13 are arranged on two sides of the main body portion 12 respectively. In other words, the first tab 11 and the second tab 13 are arranged at two ends of the electrode assembly 10 respectively. Optionally, in a direction parallel to the winding axis X, the first tab 11 and the second tab 13 are arranged at two ends of the electrode assembly 10, respectively.

The first tab 11 is wound around the winding axis X of the electrode assembly 10, and the first tab 11 is substantially columnar. The first tab 11 comprises a plurality of turns of tab layers 111 arranged around the winding axis X. Illustratively, the first tab 11 comprises N1 turns of tab layers 111, N1 being a positive integer greater than 1.

The two ends of the first tab 11 in a winding direction Y are an inner end 11a and an outer end 11b, respectively. In the embodiments, the tab layers 111 are divided with the inner end 11a of the first tab 11 as the reference. The winding direction Y is perpendicular to the winding axis X.

Specifically, the inner end 11a of the first tab 11 is a head end of a first turn of tab layer 111, and a tail end of the first turn of tab layer 111 is aligned with the head end of the first turn of tab layer 111 in a radial direction of the first tab 11, and the first turn of tab layer 111 is wound around the winding axis X in one circle. Correspondingly, the tail end of the first turn of tab layer 111 is a head end of a second turn of tab layer 111, and so on. The N1 turns of tab layers 111 are connected end to end in the winding direction Y. When dividing the tab layers 111, a head end of each turn of tab layer 111 is aligned with the inner end 1 1a of the first tab 11 in the radial direction of the first tab 11. The radial direction of the first tab 11 is perpendicular to and passes through the winding axis X.

Illustratively, the inner end 11a and the outer end 11b of the first tab 11 are aligned in the radial direction of the first tab 11 such that each turn of tab layer 111 is wound around the winding axis X in one circle.

Alternatively, of course, there is a tail portion of the first tab 11, which is less than one turn around the winding axis X. For example, this portion may be 1/3 turn, 1/2 turn, 2/3 turn or 3/4 turn around the winding axis.

After the winding is completed, the first tab 11 is substantially cylindrical, with a slit reserved between two adjacent turns of tab layers 111. In the embodiments of the present application, the first tab 11 may be treated to reduce the slit between the tab layers 111 for facilitating a connection between the first tab 11 and the electrode draw-out portion 21. For example, in the embodiments of the present application, the first tab 11 may be flattened such that end regions of the first tab 11 away from the main body portion 12 are brought closer to each other and gathered together. The flattening is to shape the end regions of the first tab 11 away from the main body portion 12 by a flattening device, to compact the end regions of the first tab 11 to form a dense end surface, thereby reducing the slit between the tab layers 111, and facilitating the welding of the first tab 11 to the electrode draw-out portion 21.

Optionally, the second tab 13 is wound around the winding axis X of the electrode assembly 10 by multiple turns, and the second tab 13 comprises a plurality of turns of tab layers. For example, the second tab 13 is also flattened to reduce a slit between tab layers of the second tab 13.

The shell 20 may be of various structures. For example, the shell 20 may comprise a housing 22 and an end cap 23. The housing 22 is of a hollow structure with an opening, and the end cap 23 covers the opening of the housing 22 and provides a sealed connection, so as to form a sealed space for accommodating the electrode assembly 10 and the electrolyte.

The housing 22 may have various shapes such as a cylinder and a cuboid. The housing 22 may be shaped depending on the specific shape of the electrode assembly 10. For example, if the electrode assembly 10 is of a cylindrical structure, a cylindrical housing may be used; and if the electrode assembly 10 is of a cuboid structure, a cuboid housing may be used. Of course, the end cap 23 may also be of various structures. For example, the end cap 23 is of a plate-like structure, or a hollow structure. As an example, the housing 22 has a cylindrical structure, the end cap 23 has a plate-like structure, and the end cap 23 covers the opening of the housing 22.

In some embodiments, the shell 20 may comprise a housing 22 and one end cap 23. The housing 22 is of a hollow structure with an opening on one side, and the end cap 23 covers the opening of the housing 22. In some other embodiments, the shell 20 comprises a housing 22 and two end caps 23. The housing 22 is of a hollow structure with openings on two opposite sides. Each of the end caps 23 covers a corresponding opening of the housing 22.

The end cap 23 may be connected directly to the housing 22, or may be connected to the housing 22 via other members. Illustratively, the shell 20 further comprises a fixing member 24. The fixing member 24 is used to fix the end cap 23 to the housing 22. For example, the fixing member 24 surrounds the outer side of the end cap 23 and clamps an edge of the end cap 23 to enable a connection between the fixing member 24 and the end cap 23. An outer edge of the fixing member 24 is welded to the housing 22 to enable a connection between the fixing member 24 and the housing 22.

The shell 20 further comprises a sealing member 25. The sealing member 25 is used to seal the opening of the housing 22 so as to improve the sealing performance of the battery cell 7. Illustratively, the sealing member 25 may be clamped between the fixing member 24 and the end cap 23.

The sealing member 25 may be made of polypropylene (PP), polyethylene (PE), or fluororubber. Optionally, the sealing member 25 is made of an insulating material, which can insulate the end cap 23 from the housing 22.

In some examples, the end cap 23 is provided with an electrolyte injection hole which runs through the end cap 23 in a thickness direction of the end cap 23. In an electrolyte injection process of the battery cell 7, an electrolyte is injected into the battery cell 7 through the electrolyte injection hole. The battery cell 7 further comprises a sealing plate 26 connected to the end cap 23 and covering the electrolyte injection hole and used for sealing the electrolyte injection hole after the electrolyte injection process is completed.

The shell 20 comprises an electrode draw-out portion 21. The electrode draw-out portion 21 is configured to draw current out of the electrode assembly 10 to output electric energy generated by the electrode assembly 10. The electrode draw-out portion 21 may be the end cap 23, may be the housing 22, or may be another part of the shell 20, which is not limited in this embodiment, as long as it can draw the current out. For example, in some examples, the end cap 23 is used as the electrode draw-out portion 21 and is electrically connected to the electrode assembly 10. Alternatively, the shell 20 further comprises an electrode terminal (not shown) arranged on the end cap 23. The electrode terminal is used as the electrode draw-out portion 21 and electrically connected to the electrode assembly 10.

In the first tab 11, N2 turns of tab layers 111 are connected to each other by welding, to form a first welded portion W1. N2 is a positive integer, where 2 ≤ N2 ≤ N1. Illustratively, after the first tab 11 is flattened, the end surface of the first tab 11 facing away from the main body portion 12 is irradiated with laser, and the N2 turns of tab layers 111 are welded by the laser to form the first welded portion W1.

The N2 turns of tab layers 111 are connected to each other via the first welded portion W1, so that a conductive path between the N2 turns of tab layers 111 can be shortened for the purpose of reducing the resistance.

The N2 turns of tab layers 111 may be arranged continuously in the winding direction Y. Alternatively, among the N2 turns of tab layers 111, some of the tab layers 111 are arranged continuously in the winding direction Y and another some of the tab layers 111 are arranged continuously in the winding direction Y. Other tab layers 111 that are not connected to the first welded portion W1 may be provided between the some of tab layers 111 and the another some of the tab layers 111.

In the first tab 11, M turns of tab layers 111 are welded to the electrode draw-out portion 21 to form a second welded portion W2. M is a positive integer, where 1 ≤ M < N1. Illustratively, after the electrode assembly 10 is placed inside the shell 20, laser acts on an outer surface of the electrode draw-out portion 21, so that a part of the electrode draw-out portion 21 and the M turns of tab layers 111 are welded by the laser to form the second welded portion W2.

Among the M turns of tab layers 111, current of each tab layer 111 may be transferred to the electrode draw-out portion 21 through the second welded portion W2 without flowing through the other tab layers 111, so that a conductive path between the M turns of tab layers 111 can be shortened, and the resistance can be thus reduced.

There may be an intersection between the N2 turns of tab layers 111 and the M turns of tab layers 111. In other words, some of the tab layers 111 are used to form both the first welded portion W1 and the second welded portion W2. Alternatively, of course, there is no intersection between the N2 turns of tab layers 111 and the M turns of tab layers 111. In other words, the tab layers 111 for forming the first welded portion W1 are different from the tab layers 111 for forming the second welded portion W2.

Among the N2 turns of tab layers 111, N3 turns of tab layers 111 are not welded to the electrode draw-out portion 21. N3 is a positive integer, where 2 ≤ N3 ≤ N2.

Since the N3 turns of tab layers 111 are not welded to the electrode draw-out portion 21, current on the N3 turns of tab layers 111 needs to be transferred to the electrode draw-out portion 21 through the tab layers 111 welded to the electrode draw-out portion 21. If the N3 turns of tab layers 111 are not connected through the first welded portion W1, then among the N3 turns of tab layers 111, current on a tab layer 111 that is far away from the second welded portion W2 needs to flow through a tab layer 111 that is close to the second welded portion W2, resulting in a long conductive path and high resistance. According to this embodiment, by welding the N3 turns of tab layers 111, current may be directly transferred through the first welded portion W1, so that the conductive path between the N3 turns of tab layers 111 is shortened to achieve the purpose of reducing the resistance.

The first welded portion W1 and the second welded portion W2 may be connected directly or indirectly via the tab layers 111.

In the battery cell 7 of the present application, the tab layers 111 that are not welded to the electrode draw-out portion 21 are welded to shorten a conductive path between the tab layers 111 as well as a conductive path between the tab layers 111 and the electrode draw-out portion 21, thereby reducing the resistance, improving the uniformity of current density, reducing the risk of polarization of electrode plates, and improving the overcurrent capability and the charging efficiency of the battery cell 7.

In some embodiments, the shell 20 comprises a housing 22 and an end cap 23. The housing 22 is provided with an opening, and the end cap 23 covers the opening of the housing 22. The end cap 23 is the electrode draw-out portion 21.

According to the embodiments, the end cap 23 is used as the electrode draw-out portion 21, so that a conventional electrode terminal may be omitted, thereby simplifying the structure of the battery cell 7.

According to the embodiments, the end cap 23 is directly welded to the first tab 11 such that a conventional current collector disk may be omitted, thereby reducing the cost and simplifying the assembly process. During welding, laser acts on an outer surface of the end cap 23 so that the housing 22 and the end cap 23 can protect the electrode assembly 10 from the outside to reduce the risk of spattering of metal particles generated by welding onto the electrode assembly 10.

In some embodiments, the battery cell 7 is a cylindrical battery cell. Correspondingly, the electrode assembly 10 is of a cylindrical structure, and the housing 22 is of a cylindrical hollow structure.

In some embodiments, at least one turn of tab layer 111 is connected to the first welded portion W1 and the second welded portion W2.

In the embodiments, the at least one turn of tab layer 111 can transfer current collected in the first welded portion W1 to the second welded portion W2 to shorten the conductive path between the first welded portion W1 and the second welded portion W2, thereby reducing the resistance, improving the uniformity of current density, reducing the risk of polarization of electrode plates, and improving the overcurrent capability and the charging efficiency of the battery cell 7.

In some embodiments, the first welded portion W1 is directly connected to the second welded portion W2.

During assembling of the battery cell 7, the first tab 11 of the electrode assembly 10 is first welded to form the first welded portion W1, and then the electrode draw-out portion 21 and the first tab 11 are welded to form the second welded portion W2 after the electrode assembly 10 is placed in the shell 20.

When welding the electrode draw-out portion 21 and the first tab 11, the first welded portion W1 is melted partially and connected to the electrode draw-out portion 21 so that the second welded portion W2 formed is crossed with and directly connected to the first welded portion W1.

According to the embodiments, the first welded portion W1 is directly connected to the second welded portion W2, so that the current collected in the first welded portion W1 can directly flow into the second welded portion W2, thereby further shortening the conductive path between the first welded portion W1 and the second welded portion W2, reducing the resistance and improving the overcurrent capability and the charging efficiency of the battery cell 7.

In some other embodiments, the first welded portion W1 and the second welded portion W2 may also be spaced apart in the circumferential direction of the first tab 11. For example, for the tab layers 111 connected to both the first welded portion W1 and the second welded portion W2, the tab layers 111 connected to the first welded portion W1 and the tab layer 111 connected to the second welded portion W2 are spaced apart in the circumferential direction of the first tab 11.

In some embodiments, the second welded portion W2 comprises a first part W21 formed at the electrode draw-out portion 21 and a second part W22 formed at the first tab 11. In a direction parallel to the winding axis X, the second part W22 has a dimension D1 greater than a dimension D2 of the first welded portion W1.

Illustratively, a thickness direction of the electrode draw-out portion 21 is parallel to the winding axis X.

In the direction parallel to the winding axis X, a distance between the second welded portion W2 and the main body portion 12 is smaller than a distance between the first welded portion W1 and the main body portion 12.

In the process of welding the electrode draw-out portion 21 and the first tab 11, a part of the electrode draw-out portion 21 forms the first part W21 after melting, solidifying, and other processes, and the above-mentioned M turns of tab layers 111 form the second part W22 after melting, solidifying, and other processes. The first part W21 and the second part W22 form an atomic-level bonded unit to reduce the resistance between the first tab 11 and the electrode draw-out portion 21 and improve the overcurrent capability.

When welding the first tab 11, laser acts directly on the first tab 11. Although the first tab 11 is flattened, if the laser energy is too high, the laser may still pass between the tab layers 111 and burn the separator, causing a safety risk. Therefore, in the embodiments, low-energy laser is generally used to weld the tab layers 111 of the first tab 11, and correspondingly, the dimension D2 of the first welded portion W1 is relatively small.

The plurality of turns of tab layers 111 of the first tab 11 are connected integrally, and even if the first welded portion W1 is cracked due to a low strength, current can be transferred between the tab layers 111. That is, the crack has little effect on current transfer. Therefore, according to the embodiments, strength requirements for the first welded portion W1 are low, and the first welded portion W1 may have a relatively small dimension.

The second welded portion W2 needs to be connected to the electrode draw-out portion 21 and the first tab 11. If the dimension D1 of the second part W22 is equal to or smaller than the dimension D2 of the first welded portion W1, the second part W22 has a low strength and is prone to cracking, which will affect the overcurrent capability of the battery cell 7 and even lead to the failure of the battery cell 7.

According to the embodiments, the first welded portion W1 has a smaller dimension such that energy required for welding of the first tab 11 is reduced and the risk of burning the electrode assembly 10 is reduced. According to the embodiments, the dimension D1 of the second part W22 is greater than the dimension D2 of the first welded portion W1 such that the strength of a connection between the electrode draw-out portion 21 and the first tab 11 is ensured and the risk of failure of the battery cell 7 is reduced.

In some embodiments, in the direction parallel to the winding axis X, the first welded portion W1 has a dimension D2 of 0.2 mm to 0.5 mm, and the second part W22 has a dimension D1 of 0.5 mm to 1.5 mm.

The smaller the dimension D2 of the first welded portion W1, the lower the strength of the first welded portion W1 and the higher the risk of cracking and failure of the first welded portion W1. The larger the dimension D2 of the first welded portion W1, the higher the energy required for welding and the higher risk of burning the main body portion 12 of the electrode assembly 10 by laser. Through tests, the inventors have set the dimension D2 of the first welded portion W1 to 0.2 mm to 0.5 mm, which may allow the energy required for welding the first tab 11 to meet the requirements and ensure the strength of the first welded portion W1 as much as possible.

The smaller the dimension D1 of the second part W22, the lower the strength of the connection between the electrode draw-out portion 21 and the first tab 11. The larger the dimension D1 of the second part W22, the smaller the distance between the second part W22 and the main body portion 12 and the higher the risk of burning the main body portion 12 by the heat generated in welding. Through tests, the inventors have set the dimension D1 of the second part W22 to 0.5 mm to 1.5 mm to ensure the strength of the connection between the electrode draw-out portion 21 and the first tab 11 and to reduce the risk of burning the main body portion 12.

In some embodiments, the total number of turns of tab layers 111 is N1, N2 turns of tab layers 111 are connected to each other via the first welded portion W1, and a value of N2/N1 is 0.5 to 0.95.

The greater the value of N2/N1, the greater the number of turns of tab layers 111 connected via the first welded portion W1 and the lower the resistance of the electrode assembly 10. However, if the value of N2/N1 is too large, laser may irradiate outside the first tab 11 during welding due to errors, leading to the risk of burning the main body portion 12 of the electrode assembly 10.

Through tests, the inventors have set the value of N2/N1 to 0.5 to 0.95 to reduce the resistance, improve the overcurrent, and reduce the risk of burning the electrode assembly 10.

In some embodiments, the value of N2/N1 is 0.7 to 0.9.

In some embodiments, neither the outermost turn of tab layer 111 nor the innermost turn of tab layer 111 is welded to the other tab layers 111.

In some embodiments, the first welded portion W1 comprises a plurality of first welded sub-portions W11. The plurality of first welded sub-portions W11 are spaced apart in the circumferential direction of the first tab 11.

In some examples, the tab layers 111 to which one first welded sub-portion W11 is connected may be the same tab layers 111 as the tab layers 111 to which another first welded sub-portion W11 is connected. In another example, the tab layers 111 to which one first welded sub-portion W11 is connected may be different tab layers 111 than the tab layers 111 to which another first welded sub-portion W11 is connected. In yet another example, some of the tab layers 111 to which one first welded sub-portion W11 is connected are the same as some of the tab layers 111 to which another first welded sub-portion W11 is connected. That is, some of the tab layers 111 are connected to both that one first welded sub-portion W11 and that another first welded sub-portion W11.

According to the embodiments, the first welded portion W1 may be formed by multiple weldings to reduce the heat generated in a single welding and reduce the risk of burning the electrode assembly 10 due to high temperature.

In some embodiments, the first welded sub-portion W11 is linear, V-shaped, W-shaped, or curved.

In some embodiments, a plurality of second welded portions W2 are provided. The plurality of second welded portions W2 are spaced apart, and at least two of the second welded portions W2 are connected to different tab layers 111.

In the embodiments, the plurality of second welded portions W2 all enable current transfer between the first tab 11 and the electrode draw-out portion 21 to reduce the difference in the conductive paths of different tab layers 111, thereby improving the uniformity of current density, reducing the risk of polarization of electrode plates, and improving the overcurrent capability and the charging efficiency of the battery cell 7.

In some embodiments, end portions of the plurality of turns of tab layers 111 facing toward the electrode draw-out portion 21 are bent and brought closer to each other such that a gap between the end portions is reduced. The end portions of the tab layers 111 are configured to be welded to form the first welded portion W1 and the second welded portion W2.

According to the embodiments, the end portions of the plurality of turns of tab layers 111 are bent and brought closer to each other to reduce the slit between the tab layers 111, thereby reducing the risk of laser leakage during welding.

In some embodiments, the electrode draw-out portion 21 comprises a body portion 211 and a connecting portion 212. The connecting portion 212 surrounds an outer side of the body portion 211, and the connecting portion 212 has a thickness less than that of the body portion 211. The connecting portion 212 is configured to be welded to the first tab 11 to form the second welded portion W2. In the direction parallel to the winding axis X, the first welded portion W1 overlaps at least partially with the body portion 211.

According to the embodiments, since the thickness of the connecting portion 212 is reduced, the energy required for welding the connecting portion 212 and the first tab 11 is reduced and the risk of burning the separator of the electrode assembly 10 is reduced.

In the direction parallel to the winding axis X, some of the tab layers 111 overlap with the body portion 211. Due to the great thickness of the body portion 211, it is difficult to be welded directly to the tab layers 111, which leads to a long conductive path of the tab layers 111 that overlap with the body portion 211. According to the embodiments, the first welded portion W1 is connected to the tab layers 111 that overlap with the body portion 211 so as to shorten the conductive path of the tab layers 111, thereby reducing the resistance and improving the overcurrent capability.

In some embodiments, the electrolyte injection hole is provided in the body portion 211.

In some embodiments, the connecting portion 212 is a ring-shaped flat plate.

In some embodiments, the electrode draw-out portion 21 further comprises a reinforcing portion 213. The reinforcing portion 213 protrudes from the surface of the connecting portion 212 facing away from the electrode assembly 10 and is connected to the body portion 211. A part of the connecting portion 212 that is not covered by the reinforcing portion 213 is configured to be welded to the first tab 11 to form the second welded portion W2.

According to the embodiments, the reinforcing portion 213 is provided to increase the strength of the electrode draw-out portion 21, reduce deformation of the electrode draw-out portion 21, and reduce the risk of cracking of the second welded portion W2.

In an embodiment, a plurality of reinforcing portions 213 are provided. The plurality of reinforcing portions 213 are spaced apart in a circumferential direction of the body portion 211.

In this embodiment, the plurality of reinforcing portions 213 may further increase the strength of the electrode draw-out portion 21 and make the strength of the electrode draw-out portion 21 more uniform.

In some embodiments, the reinforcing portion 213 is provided with transition bevels 213a at two ends in the circumferential direction of the body portion 211. The transition bevels 213a are connected to an outer surface of the connecting portion 212.

FIG. 8 is a schematic structural diagram of an electrode assembly of a battery cell provided in some other embodiments of the present application.

As shown in FIG. 8, in some embodiments, the first welded portion W1 is of a helical structure arranged around the winding axis.

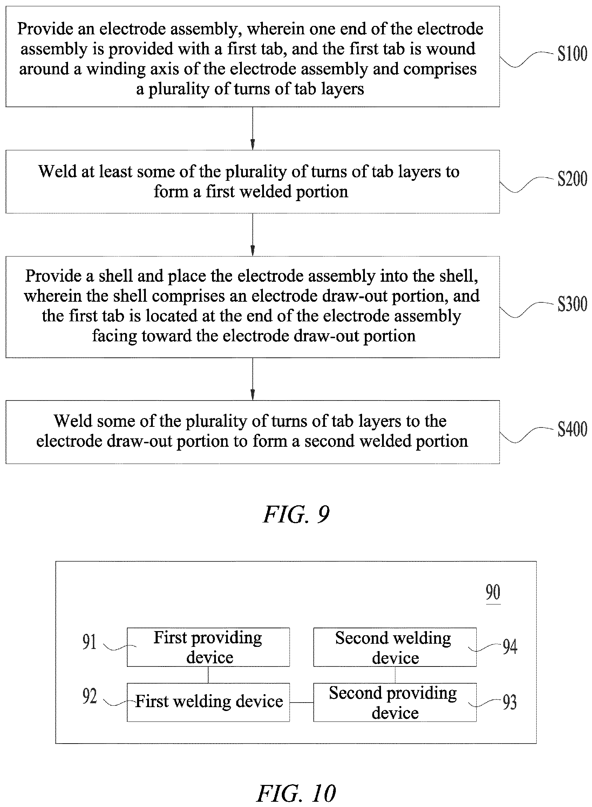

FIG. 9 is a schematic flowchart of a method for manufacturing a battery cell provided in some embodiments of the present application.

As shown in FIG. 9, the method for manufacturing a battery cell provided in the embodiments of the present application comprises the following steps.

In S 100, an electrode assembly is provided, wherein one end of the electrode assembly is provided with a first tab, and the first tab is wound around a winding axis of the electrode assembly and comprises a plurality of turns of tab layers.

In S200, at least some of the plurality of turns of tab layers are welded to form a first welded portion.

In S300, a shell is provided and the electrode assembly is placed into the shell, wherein the shell comprises an electrode draw-out portion, and the first tab is located at the end of the electrode assembly facing toward the electrode draw-out portion.

In S400, some of the plurality of turns of tab layers are welded to the electrode draw-out portion to form a second welded portion.

Among the tab layers connected to the first welded portion, at least one turn of tab layer is not welded to the electrode draw-out portion.

It should be noted that for a related structure of the battery cell manufactured by the foregoing method for manufacturing a battery cell, reference may be made to the battery cells provided in the foregoing embodiments.

FIG. 10 is a schematic block diagram of a system for manufacturing a battery cell provided in some embodiments of the present application.

As shown in FIG. 10, the system 90 for manufacturing a battery cell according to the embodiments of the present application comprises:

a first providing device 91 for providing an electrode assembly, wherein one end of the electrode assembly is provided with a first tab, and the first tab is wound around a winding axis of the electrode assembly and comprises a plurality of turns of tab layers;

a first welding device 92 for welding at least some of the plurality of turns of tab layers to form a first welded portion;

a second providing device 93 for providing a shell and placing the electrode assembly into the shell, wherein the shell comprises an electrode draw-out portion, and the first tab is located at the end of the electrode assembly facing toward the electrode draw-out portion; and

a second welding device 94 for welding some of the plurality of turns of tab layers to the electrode draw-out portion to form a second welded portion.

Among the tab layers connected to the first welded portion, at least one turn of tab layer is not welded to the electrode draw-out portion.

For a related structure of the battery cell manufactured by the foregoing manufacturing system, reference may be made to the battery cells provided in the foregoing embodiments.

It should be noted that the embodiments in the present application and features in the embodiments may be combined with each other without conflicts.

Finally, it should be noted that the foregoing embodiments are merely used for illustrating rather than limiting the technical solutions of the present application. Although the present application has been illustrated in detail with reference to the foregoing embodiments, it should be understood by those of ordinary skill in the art that the technical solutions described in the foregoing embodiments may still be modified, or some of the technical features therein may be equivalently substituted, but these modifications or substitutions do not make the essence of corresponding technical solutions depart from the spirit and scope of the technical solutions of the embodiments of the present application.

## Claims

1. A battery cell, comprising:
a shell comprising an electrode draw-out portion; and
an electrode assembly accommodated in the shell, the end of the electrode assembly facing toward the electrode draw-out portion being provided with a first tab, the first tab being wound around a winding axis of the electrode assembly and comprising a plurality of turns of tab layers, and at least some of the plurality of turns of tab layers being welded to form a first welded portion;
wherein some of the plurality of turns of tab layers are welded to the electrode draw-out portion to form a second welded portion; and among the tab layers connected to the first welded portion, at least one turn of tab layer is not welded to the electrode draw-out portion.

2. The battery cell according to claim 1, wherein at least one turn of tab layer is connected to the first welded portion and the second welded portion.

3. The battery cell according to claim 2, wherein the first welded portion is directly connected to the second welded portion.

4. The battery cell according to any one of claims 1 to 3, wherein the second welded portion comprises a first part formed at the electrode draw-out portion and a second part formed at the first tab; and
in a direction parallel to the winding axis, the second part has a dimension greater than a dimension of the first welded portion.

5. The battery cell according to claim 4, wherein in the direction parallel to the winding axis, the dimension of the first welded portion is 0.2 mm to 0.5 mm, and the dimension of the second part is 0.5 mm to 1.5 mm.

6. The battery cell according to any one of claims 1 to 5, wherein the total number of turns of tab layers is N1, N2 turns of tab layers are connected to each other via the first welded portion, and a value of N2/N1 is 0.5 to 0.95.

7. The battery cell according to any one of claims 1 to 6, wherein the first welded portion comprises a plurality of first welded sub-portions, the plurality of first welded sub-portions being spaced apart in a circumferential direction of the first tab.

8. The battery cell according to claim 7, wherein the first welded sub-portion is linear, V-shaped, W-shaped, or curved.

9. The battery cell according to any one of claims 1 to 6, wherein the first welded portion is of a helical structure arranged around the winding axis.

10. The battery cell according to any one of claims 1 to 6, wherein a plurality of second welded portions are provided, which are spaced apart, and at least two of which are connected to different tab layers.

11. The battery cell according to any one of claims 1 to 10, wherein end portions of the plurality of turns of tab layers facing toward the electrode draw-out portion are bent and brought closer to each other such that a gap between the end portions is reduced; and
the end portions are configured to be welded to form the first welded portion and the second welded portion.

12. The battery cell according to any one of claims 1 to 11, wherein the electrode draw-out portion comprises a body portion and a connecting portion, the connecting portion surrounds an outer side of the body portion, and the connecting portion has a thickness less than that of the body portion;
the connecting portion is configured to be welded to the first tab to form the second welded portion; and in the direction parallel to the winding axis, the first welded portion overlaps at least partially with the body portion.

13. The battery cell according to claim 12, wherein the electrode draw-out portion further comprises a reinforcing portion, the reinforcing portion protruding from the surface of the connecting portion facing away from the electrode assembly and being connected to the body portion; and
a part of the connecting portion that is not covered by the reinforcing portion is configured to be welded to the first tab to form the second welded portion.

14. The battery cell according to claim 13, wherein a plurality of reinforcing portions are provided, which are spaced apart in a circumferential direction of the body portion.

15. The battery cell according to any one of claims 1 to 14, wherein the shell comprises a housing and an end cap, the housing is provided with an opening, and the end cap covers the opening of the housing; and
the end cap is the electrode draw-out portion.

16. The battery cell according to any one of claims 1 to 15, wherein the battery cell is a cylindrical battery cell.

17. A battery, comprising a plurality of battery cells of any one of claims 1 to 16.

18. A power consuming device, comprising a battery of claim 17, wherein the battery is configured to supply electric energy.

19. A method for manufacturing a battery cell, the method comprising:
providing an electrode assembly, wherein one end of the electrode assembly is provided with a first tab, and the first tab is wound around a winding axis of the electrode assembly and comprises a plurality of turns of tab layers;
welding at least some of the plurality of turns of tab layers to form a first welded portion;
providing a shell and placing the electrode assembly into the shell, wherein the shell comprises an electrode draw-out portion, and the first tab is located at the end of the electrode assembly facing toward the electrode draw-out portion; and
welding some of the plurality of turns of tab layers to the electrode draw-out portion to form a second welded portion;
wherein among the tab layers connected to the first welded portion, at least one turn of tab layer is not welded to the electrode draw-out portion.

20. A system for manufacturing a battery cell, the system comprising:
a first providing device for providing an electrode assembly, wherein one end of the electrode assembly is provided with a first tab, and the first tab is wound around a winding axis of the electrode assembly and comprises a plurality of turns of tab layers;
a first welding device for welding at least some of the plurality of turns of tab layers to form a first welded portion;
a second providing device for providing a shell and placing the electrode assembly into the shell, wherein the shell comprises an electrode draw-out portion, and the first tab is located at the end of the electrode assembly facing toward the electrode draw-out portion; and
a second welding device for welding some of the plurality of turns of tab layers to the electrode draw-out portion to form a second welded portion;
wherein among the tab layers connected to the first welded portion, at least one turn of tab layer is not welded to the electrode draw-out portion.
